(19) **Europäisches Patentamt / European Patent Office / Office européen des brevets**

(11) **EP 4 082 867 B1**

(12) **EUROPEAN PATENT SPECIFICATION**

(45) Date of publication and mention of the grant of the patent:
**17.09.2025 Bulletin 2025/38**

(21) Application number: **20908391.4**

(22) Date of filing: **06.11.2020**

(51) International Patent Classification (IPC):
*B61L 23/00* (2006.01)      *H04N 17/00* (2006.01)
*G06T 7/00* (2017.01)        *G06T 7/593* (2017.01)
*G06T 7/80* (2017.01)        *B60L 3/00* (2019.01)
*G06T 7/73* (2017.01)

(52) Cooperative Patent Classification (CPC):
**G06T 7/80; B61L 23/04; B61L 23/041; G06T 7/73; H04N 7/183; H04N 23/61;** B61L 25/025;
G06T 2207/10021; G06T 2207/30244;
G06T 2207/30261; H04N 2013/0081

(86) International application number:
**PCT/JP2020/041615**

(87) International publication number:
**WO 2021/131351 (01.07.2021 Gazette 2021/26)**

(54) **AUTOMATIC CAMERA INSPECTION SYSTEM**

AUTOMATISCHES KAMERAINSPEKTIONSSYSTEM

SYSTÈME D'INSPECTION DE CAMÉRA AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2019 JP 2019231695**

(43) Date of publication of application:
**02.11.2022 Bulletin 2022/44**

(73) Proprietor: **Kabushiki Kaisha Toshiba**
**Minato-ku**
**Tokyo (JP)**

(72) Inventors:
• **TAKAHASHI, Yusuke**
  **Kawasaki-shi, Kanagawa 212-0013 (JP)**
• **KOBAYASHI, Hiroyuki**
  **Kawasaki-shi, Kanagawa 212-0013 (JP)**
• **SETO, Naoto**
  **Kawasaki-shi, Kanagawa 212-0013 (JP)**
• **YAMASAKI, Yoshiaki**
  **Kawasaki-shi, Kanagawa 212-0013 (JP)**

• **HORIE, Masahiro**
  **Kawasaki-shi, Kanagawa 212-0013 (JP)**
• **FUTAGAMI, Takuya**
  **Kawasaki-shi, Kanagawa 212-0013 (JP)**
• **HATTORI, Yohei**
  **Kawasaki-shi, Kanagawa 212-0013 (JP)**
• **ITO, Hiroaki**
  **Kawasaki-shi, Kanagawa 212-0013 (JP)**
• **KATO, Noriyasu**
  **Kawasaki-shi, Kanagawa 212-0013 (JP)**
• **HORIGUCHI, Kazutoshi**
  **Kawasaki-shi, Kanagawa 212-0013 (JP)**

(74) Representative: **AWA Sweden AB**
**Junkersgatan 1**
**582 35 Linköping (SE)**

(56) References cited:
**WO-A1-2017/057057      WO-A1-2018/179281**
**WO-A1-2019/126332      JP-A- 2008 304 248**
**JP-A- 2008 304 248      JP-A- 2017 032 356**
**JP-A- 2019 193 373**

## Description

Field

Embodiments of the present invention relate to an automatic camera inspection system.

Background

There has been developed a system that captures an image ahead of a railway vehicle while driving by a stereo camera mounted on the railway vehicle and detects whether an obstacle is present near rails by using the image.

The railway vehicle needs to detect an obstacle before a stop distance obtained by adding an idle running distance from detection of the obstacle by the system to the start of deceleration of the railway vehicle and a braking distance from the start of deceleration to the stop of the railway vehicle. In addition, compared to an automobile, it is more difficult to avoid an obstacle by braking or steering because the railway vehicle has a longer braking distance and travels on a laid track. Therefore, the railway vehicle is required to detect an obstacle present on its course from a relatively distant place with high accuracy. In order to detect the presence of an obstacle and the distance to the obstacle with high accuracy, the stereo camera of the railway vehicle is required to be calibrated with high accuracy. JP2019193373 A relates to a fixed position stop controller for a train. JP2008304248 A relates to a calibration method of a vehicle-mounted stereoscopic camera which acquires a stereo image for distance image generation.

However, there is a problem that a relative position between the cameras is shifted over time and the detection performance is deteriorated, for example.

Therefore, a system is demanded which can automatically and easily determine the necessity for camera calibration in order to prevent performance deterioration due to secular change.

Citation List

Patent Literatures

    [Patent Literature 1] Japanese Patent Registration No. 6122365
    [Patent Literature 2] Japanese Patent Application Laid-open No. 2019-84881
    [Patent Literature 3] Japanese Patent Application Laid-open No. 2019-188996

Summary

Technical Problem

The present invention provides a camera inspection system that can automatically and easily determine the necessity of calibration of a camera mounted on a railway vehicle.

Solution to Problem

The invention is defined by the appended claims.

Brief Description of Drawings

    [FIG. 1] FIG. 1 is a diagram illustrating an example of a schematic configuration of a railway vehicle according to the present embodiment.
    [FIG. 2] FIG. 2 is a block diagram illustrating an example of a functional configuration of a driving-obstacle detection device included in a railway vehicle according to the present embodiment.
    [FIG. 3] FIG. 3 is a diagram illustrating a setting example of a monitoring-region in a railway vehicle according to the present embodiment.
    [FIG. 4] FIG. 4 is a diagram illustrating a setting example of a monitoring-region in a railway vehicle according to the present embodiment.
    [FIG. 5] FIG. 5 is a diagram illustrating an example of a flow of obstacle detection processing in a railway vehicle according to the present embodiment.

[FIG. 6] FIG. 6 is a schematic explanatory diagram of an example of a monitoring region setting method in a railway vehicle according to the present embodiment.

[FIG. 7] FIG. 7 is an explanatory diagram of an example of processing of setting a base plane in a railway vehicle according to the present embodiment.

[FIG. 8] FIG. 8 is a block diagram illustrating an example of a configuration of a camera inspection system according to a first embodiment.

[FIG. 9] FIG. 9 is a conceptual diagram illustrating a method of calculating a second distance.

[FIG. 10] FIG. 10 is a flowchart illustrating an operation example of the camera inspection system according to the first embodiment.

[FIG. 11] FIG. 11 is a conceptual diagram illustrating a method of calculating a second distance according to a first modification of the first embodiment.

[FIG. 12] FIG. 12 is a conceptual diagram illustrating a method of calculating a second distance according to a second modification of the first embodiment.

Description of Embodiments

Embodiments of the present invention will be explained below with reference to the accompanying drawings. The embodiments do not limit the present invention. The drawings are schematic or conceptual and proportions of respective parts are not necessarily identical to the actual ones. In the specifications and the drawings, elements identical to those explained with respect to already mentioned drawings are denoted by like reference signs and detailed explanations thereof are omitted as appropriate.

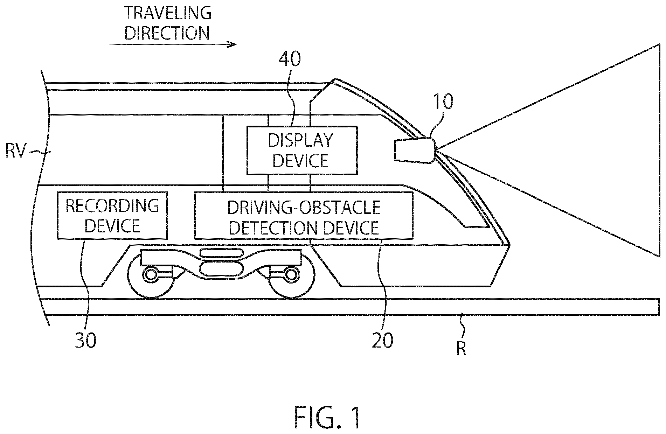

FIG. 1 is a diagram illustrating an example of a schematic configuration of a railway vehicle according to the present embodiment. As illustrated in FIG. 1, a railway vehicle RV according to the present embodiment includes a sensor 10, a driving-obstacle detection device 20, a recording device 30, and a display device 40. The sensor 10 is an example of an image-capturing portion provided to be able to capture an image in the travelling direction of the railway vehicle RV. The driving-obstacle detection device 20 is an example of an obstacle detection device that detects an obstacle that hinders driving of the railway vehicle RV. The recording device 30 memorizes the result of obstacle detection by the driving-obstacle detection device 20. The display device 40 displays various types of information, for example, including an image captured in the travelling direction of the railway vehicle RV by the sensor 10 and the result of obstacle detection by the driving-obstacle detection device 20.

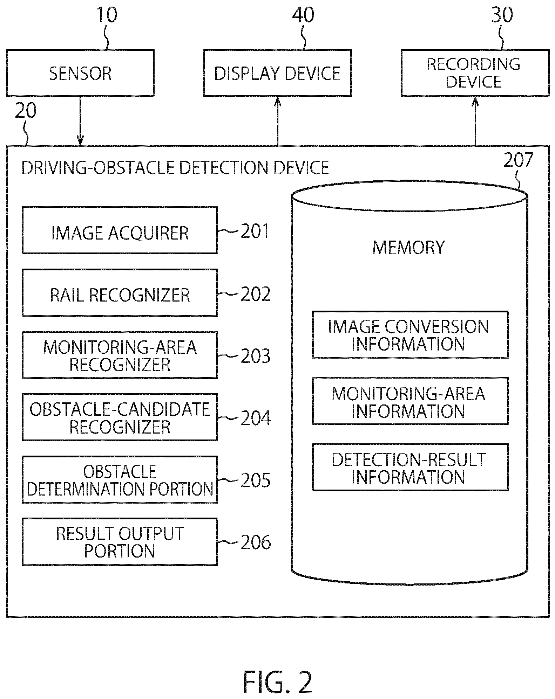

FIG. 2 is a block diagram illustrating an example of a functional configuration of a driving-obstacle detection device included in a railway vehicle according to the present embodiment. As illustrated in FIG. 2, the driving-obstacle detection device 20 includes an image acquirer 201, a rail recognizer 202, a monitoring-area recognizer 203, an obstacle-candidate recognizer 204, an obstacle determination portion 205, a result output portion 206, and a memory 207. In the present embodiment, a part or whole of the image acquirer 201, the rail recognizer 202, the monitoring-area recognizer 203, the obstacle-candidate recognizer 204, the obstacle determination portion 205, and the result output portion 206 is implemented by execution of software memorized in the memory 207 by a processor such as a CPU (Central Processing Unit) included in the railway vehicle RV.

Further, a part or whole of the image acquirer 201, the rail recognizer 202, the monitoring-area recognizer 203, the obstacle-candidate recognizer 204, the obstacle determination portion 205, and the result output portion 206 may be implemented by hardware that is a circuit board, such as an LSI (Large Scale Integration), an ASIC (Application Specific Integrated Circuit), or an FPGA (Field Programmable Gate Array). Furthermore, the image acquirer 201, the rail recognizer 202, the monitoring-area recognizer 203, the obstacle-candidate recognizer 204, the obstacle determination portion 205, and the result output portion 206 may be implemented by cooperation of software executed by a processor and hardware.

The memory 207 includes nonvolatile storage media such as a ROM (Read Only Memory), a flash memory, an HDD (Hard Disk Drive), and an SD card, and a volatile storage media such as a RAM (Random Access Memory) and a register. The memory 207 memorizes therein various types of information including, for example, a program to be executed by a processor included in the railway vehicle RV.

The image acquirer 201 is an example of an acquirer that acquires an image of visible light (hereinafter, "color image") obtained by image capturing in the travelling direction of the railway vehicle RV by the sensor 10 and a range image based on which a distance to an object present in an image capturing range of the sensor 10 can be identified. In the present embodiment, the image acquirer 201 acquires, as a color image, any of a plurality of images obtained by image capturing in the travelling direction of the railway vehicle RV by a plurality of image capturing portions included in the sensor 10 from a plurality of different viewpoints.

The image acquirer 201 also acquires the plural images as range images. Specifically, the image acquirer 201 converts the plural images respectively obtained by image capturing by the image capturing portions included in the sensor 10 into grayscale images. The image acquirer 201 then performs geometric transformation for a grayscale image of one camera to obtain an image that is obtained when optical axes of the image capturing portions are virtually made parallel to each other (hereinafter, "rectified image" or "parallel coordinate image"). The image acquirer 201 then acquires the range image based on which the distance to the object within the image-capturing range of the image capturing portion included in the sensor 10 can be identified, by using the rectified image and another grayscale image in accordance with the principle of parallel stereoscopy.

The rail recognizer 202 serves as an example of a rail detector that detects rails on which the railway vehicle RV drives in the color image. In the present embodiment, the rail recognizer 202 converts a grayscale image converted from a color image obtained by image capturing by the sensor 10 into an image with enhanced edges (hereinafter, "edge-enhanced image"). With regard to the edge-enhanced image, the rail recognizer 202 then generates a group of a pixel having an edge intensity larger than a preset edge intensity and a pixel around that pixel which has an identical edge intensity. The rail recognizer 202 then extracts, from the generated grouped pixels, a group of pixels arranged in the travelling direction of the railway vehicle RV to form a line segment. The rail recognizer 202 then detects, from the extracted group of pixels, a group of pixels satisfying a preset evaluation condition as rails on which the railway vehicle RV drives. Here, the evaluation condition is that a group of pixels as a target of evaluation can be determined as rails and, for example, the pixels have edge intensities determined as rails.

The monitoring-area recognizer 203 serves as an example of a monitoring-region setting portion that sets a three-dimensional monitoring region for a color image with the rails detected by the rail recognizer 202 used as a reference. The monitoring region is a three-dimensional region in the color image, defined by a vehicle gauge of the railway vehicle RV or a construction gauge. The monitoring-area recognizer 203 also obtains value-range information that enables identification of a value range that is a range of distance from the sensor 10 to the monitoring region, based on the color image.

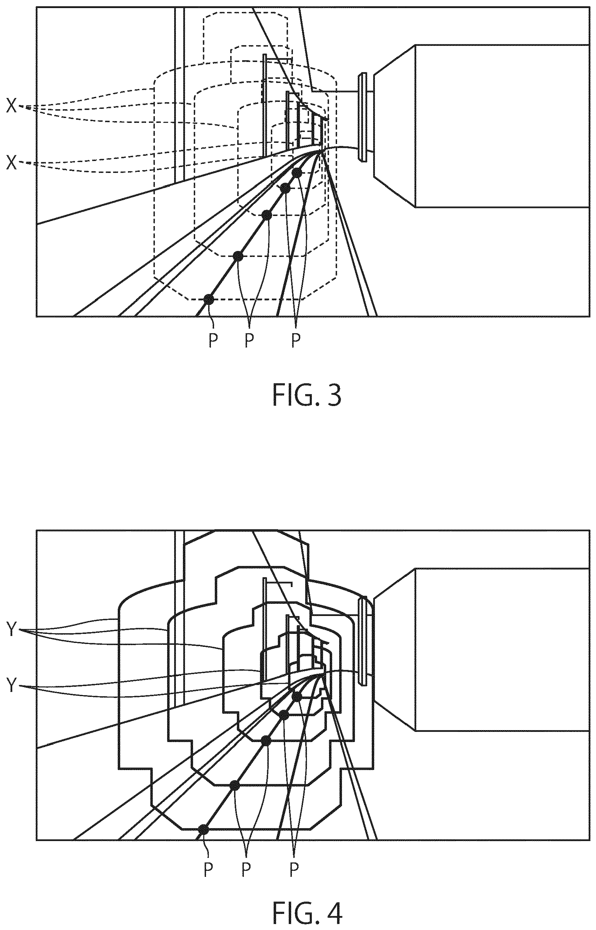

FIGS. 3 and 4 are diagrams illustrating a setting example of a monitoring region in a railway vehicle according to the present embodiment. As illustrated in FIG. 3, the monitoring-area recognizer 203 obtains a vehicle gauge cross-section X at a given setting position P on the rails detected by the rail recognizer 202 and a distance to that vehicle gauge cross-section X based on an installation condition of the sensor 10 and a constraint condition, for example, that the width between the detected rails is constant. The vehicle gauge cross-section X is a cross-section of a vehicle gauge in a direction perpendicular to the travelling direction of the railway vehicle RV. The monitoring-area recognizer 203 sets a tunnel-like region that includes, as cross-sections thereof, the vehicle gauge cross-sections X respectively obtained at different setting positions P on the rails in the travelling direction of the railway vehicle RV, as a monitoring region. The monitoring-area recognizer 203 also obtains a value range that is a range of distance (a set of distances) to the vehicle gauge cross-section X obtained at each setting position P, as value-range information.

Alternatively, as illustrated in FIG. 4, the monitoring-area recognizer 203 obtains a construction gauge cross-section Y at a given setting position P on the rails detected by the rail recognizer 202 and a distance to that construction gauge cross-section Y based on an installation condition of the sensor 10 and a constraint condition, for example, that the detected width between the rails is constant. The construction gauge cross-section Y is a cross-section of a construction gauge at the setting position P in a direction perpendicular to the travelling direction of the railway vehicle RV. The monitoring-area recognizer 203 sets a tunnel-like region that includes, as cross-sections thereof, the construction gauge cross-sections Y respectively obtained at different setting positions P on the rails in the travelling direction of the railway vehicle RV, as a monitoring region. The monitoring-area recognizer 203 also obtains a value range that is a range of distance (a set of distances) to the construction gauge cross-section Y obtained at each setting position P, as value-range information.

Referring back to FIG. 2, the obstacle-candidate recognizer 204 extracts an object included in a monitoring region as a candidate for an obstacle (hereinafter, "obstacle candidate") based on a range image and value-range information. In the present embodiment, the obstacle-candidate recognizer 204 extracts, from pixels in the range image, a similar region formed by grouping pixels each indicating a distance coincident with a distance identified by the value-range information, as a three-dimensional object present in the monitoring region as the obstacle candidate.

The obstacle determination portion 205 detects an obstacle from the obstacle candidates extracted by the obstacle-candidate recognizer 204 based on at least one of the sizes of the obstacle candidates and motion vectors of the obstacle candidates. Accordingly, since an object which is highly likely to be an obstacle from among objects present in the monitoring region can be detected as an obstacle, the accuracy of obstacle detection can be improved. In the present embodiment, the obstacle determination portion 205 detects an obstacle candidate with a size equal to or larger than a preset size in the obstacle candidates as an obstacle. Further, the obstacle determination portion 205 detects an obstacle candidate with a motion vector indicating movement toward the rails in the obstacle candidates as an obstacle. Furthermore, the obstacle determination portion 205 may detect an obstacle candidate with a size equal to or larger than a preset size and a motion vector indicating movement toward the rails in the obstacle candidates as an obstacle.

Therefore, in the present embodiment, the obstacle-candidate recognizer 204 and the obstacle determination portion 205 cooperate to serve as an example of an obstacle detector that detects an obstacle that is present in a monitoring region and hinders driving of the railway vehicle RV based on a range image and value-range information. Accordingly, in a case of detecting an obstacle that hinders driving of the railway vehicle RV by using a color image obtained by image capturing in the travelling direction of the railway vehicle RV, the monitoring region for obstacle detection can be dynamically and appropriately set in the color image, and obstacle detection can be performed. Consequently, the obstacle that hinders driving of the railway vehicle RV can be detected with high accuracy.

The result output portion 206 serves as an example of an output portion that outputs the result of obstacle detection by the obstacle-candidate recognizer 204 and the obstacle determination portion 205. In the present embodiment, when the obstacle determination portion 205 detects an obstacle, the result output portion 206 causes the display device 40 to display information indicating that the obstacle has been detected, together with a color image. The result output portion 206 also stores the result of obstacle detection in the recording device 30.

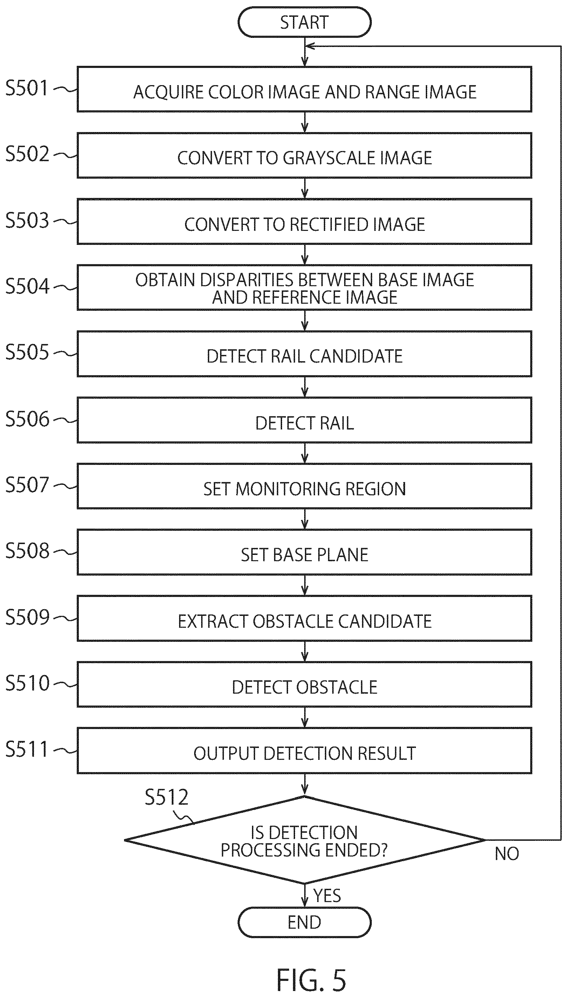

Next, an example of a flow of obstacle detection processing in a railway vehicle according to the present embodiment is described with reference to FIG. 5. FIG. 5 is a diagram illustrating an example of a flow of obstacle detection processing in a railway vehicle according to the present embodiment.

The image acquirer 201 acquires a color image and a range image from the sensor 10 (Step S501). The sensor 10 is an optical sensor that can output the color image and the range image simultaneously and is an optical sensor employing a pattern projection method, photogrammetry, or the Time Of Flight method. Further, in a case where the sensor 10 includes two image capturing portions (two image capturing portions respectively provided on left and right) spaced from each other in the vehicle-width direction of the railway vehicle RV, the image acquirer 201 may acquire two color images obtained by image capturing by the two image capturing portions as range images.

When acquiring two color images as range images, the image acquirer 201 converts the two color images into grayscale images (Step S502). In the present embodiment, an example is described in which in order to reduce the amount of calculation required for obstacle detection, the image acquirer 201 converts the two color images into grayscale images and then detects an obstacle by using the grayscale images. However, obstacle detection can be also performed by using the color images as they are.

Next, the image acquirer 201 corrects distortion caused by, for example, aberration of a lens included in the sensor 10 for each of the two grayscale images and performs geometric transformation for one of the two grayscale images to obtain a rectified image (Step S503). A general camera lens has radial distortion and circumferential distortion. Therefore, the image acquirer 201 stores a coefficient or a table required for correcting distortion of an image obtained by image capturing by the sensor 10, in the memory 207 as image conversion information. The image acquirer 201 corrects distortion of each grayscale image by using the image conversion information memorized in the memory 207. In addition, internal parameters of the sensor 10 and external parameters based on a relative positional relation may be obtained by calibration, and the external parameters may be stored in the memory 207 as the image conversion information.

Next, the image acquirer 201 obtains disparities between a base image and a reference image as a range image by using the rectified image and the grayscale image as the base image and the reference image, respectively (Step S504). According to a geometric constraint condition such as epipolar geometry, a corresponding pixel that is a pixel in the reference image corresponding to a pixel of interest in the base image is obtained by performing search only on an epipolar line at the same height as the height in the pixel of interest in the base image. Accordingly, search for the corresponding pixel can be achieved with a small amount of calculation and high accuracy. Search for the corresponding pixel is performed by, for example, template matching in which the corresponding pixel is searched in each small region in the reference image, global matching in which an optimal corresponding pixel (solution) is searched in the entire reference image, or semiglobal matching in which the optimal corresponding pixel is searched in pixels around the pixel of interest in the reference image. However, when search for the corresponding pixel has to be performed in real time, that search is frequently performed by template matching.

After the corresponding pixel is obtained, the image acquirer 201 obtains a disparity (parallax) between the pixel of interest in the base image and the corresponding pixel in the reference image. In the present embodiment, the image acquirer 201 obtains the corresponding pixel in the reference image by shifting the pixel of interest in the base image by one pixel at a time. Therefore, in a case where the reference image is a digital image, the coordinates of the corresponding image are represented by integers. Therefore, in order to estimate the coordinates of the corresponding pixel with accuracy of a decimal point or less, sub-pixel estimation is used. Sub-pixel estimation uses equiangular line fitting when an evaluation function used for search for the corresponding pixel is a linear function, such as an SAD (Sum of Absolute Difference), and uses parabolic fitting when the evaluation function used for search for the corresponding pixel is a quadratic function, such as an SSD (Sum of Squared Difference).

When it is not necessary to obtain the disparity with accuracy of a decimal point or less or when reduction of a processing time for acquisition of the disparity is required, the disparity may be obtained without using sub-pixel estimation. Further, when an evaluation value of a coordinate value of the corresponding pixel by the evaluation function used in sub-pixel estimation is larger than a preset threshold or when a difference between feature values (for example, changes in gradation) of the pixel of interest and the corresponding pixel is small, the obtained disparity may be made invalid.

By the above processes, the image acquirer 201 obtains, for all pixels in the base image or pixels in an effective region in the base image, disparities from pixels in the reference image. The image acquirer 201 may obtain distances Z to an object represented by pixels in the base image as a range image by using the following Expression 1. In Expression 1, f is a focal length of two cameras included in the sensor 10, B is a distance between the two cameras included in the sensor 10, and D is a disparity or parallax between a pixel in the base image and a pixel in the reference image.

$$Z=f \times B/D \quad (\text{Expression 1})$$

Next, the rail recognizer 202 detects a rail candidate that is a candidate of rails on which the railway vehicle RV drives from the refence image (Step S505). In the present embodiment, the rail recognizer 202 converts the base image into an edge-enhanced image. The rail recognizer 202 then detects, in the edge-enhanced image, a group of pixels arranged in the travelling direction of the railway vehicle RV to form a line segment as the rail candidate, in a group of pixels including a pixel having an edge intensity larger than a preset edge intensity and a pixel around that pixel, which has an identical edge intensity. The rail recognizer 202 then detects a rail candidate in the detected rail candidates which satisfies a preset evaluation condition, as rails (Step S506).

The monitoring-area recognizer 203 sets a three-dimensional monitoring region for the base image with the rails detected by the rail recognizer 202 used as a reference (Step S507).

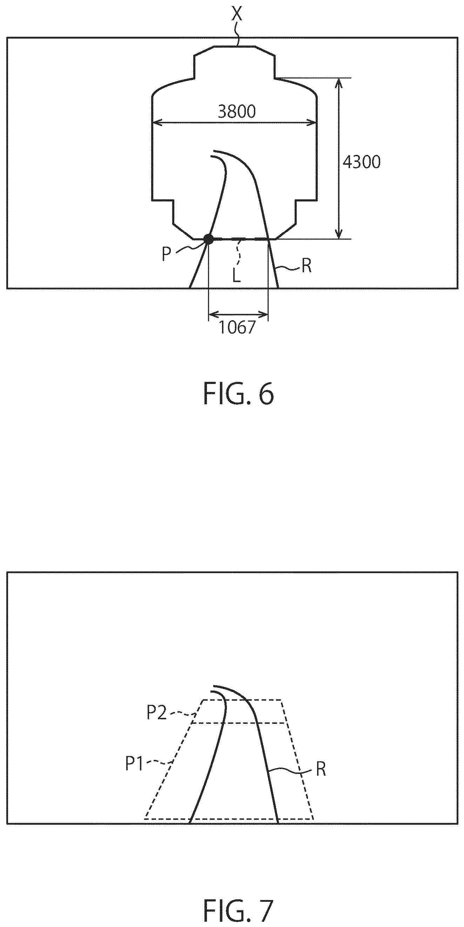

FIG. 6 is a schematic explanatory diagram of an example of a monitoring region setting method in a railway vehicle according to the present embodiment. As illustrated in FIG. 6, the monitoring-area recognizer 203 sets, with respect to a given setting position P on rails R detected by the rail recognizer 202, a line segment that connects left and right rails at the setting position P and is horizontal. Here, the line segment is assumed to have a length of L pixels in a base image. When a pitch angle, a yaw angle, and a roll angle of a camera included in the sensor 10 are all 0° and rails on which the railway vehicle RV drives are narrow-gauge rails, the resolution per pixel in the horizontal direction is (1067/L) millimeters.

Alternatively, the monitoring-area recognizer 203 acquires a disparity between a pixel of interest and a corresponding pixel at the setting position P or a distance to the setting position P by using a range image. Next, the monitoring-area recognizer 203, which obtains the resolutions per pixel depending on disparities or distances in advance, identifies the resolution per pixel depending on the acquired disparity or distance. The monitoring-area recognizer 203 may set the identified resolution per pixel as the resolution per pixel in the horizontal direction at the setting position P. When the aspect ratio of an image sensor of the sensor 10 is 1:1, the resolution per pixel in a direction perpendicular to the line segment (that is, in the vertical direction) is the same as the resolution per pixel in the horizontal direction.

Next, as illustrated in FIG. 6, the monitoring-area recognizer 203 sets the vehicle gauge cross-section X for the setting position P in the base image, in accordance with the dimensions of a vehicle gauge in a real space (for example, width: 3800 mm, height: 4300 mm) and the resolution per pixel of the base image. Although the monitoring-area recognizer 203 sets a region that imitates a cross-section of the vehicle gauge as the vehicle gauge cross-section X in the present embodiment, setting of the vehicle gauge cross-section X is not limited thereto as long as a region that enables identification of the vehicle gauge is set as the vehicle gauge cross-section X. For example, the monitoring-area recognizer 203 may set a region having a preset shape, for example, a rectangular shape that approximates the cross-section of the vehicle gauge as the vehicle gauge cross-section X. In addition, while an example in which the vehicle gauge cross-section X is set for the base image is described here, this description can be also applied to a case where the construction gauge cross-section Y is set for the base image. Subsequently, the monitoring-area recognizer 203 repeats setting of the vehicle gauge cross-section X for the setting position P while moving the setting position P in the base image along the travelling direction of the railway vehicle RV, thereby setting a tunnel-like monitoring region for the base image.

Further, the monitoring-area recognizer 203 obtains, at each setting position P, a distance to the setting position P or a disparity between a pixel of interest and a corresponding pixel at the setting position P based on, for example, the resolution per pixel of the base image and the number of pixels from the bottom of the base image (that is, a front edge in an image capturing range of the sensor 10) to the setting position P. The monitoring-area recognizer 203 then sets a value range of the distances or disparities obtained at the respective setting positions P as value-range information. The monitoring-area recognizer 203 also stores the value-range information in the memory 207 as monitoring-area information.

Referring back to FIG. 5, the obstacle-candidate recognizer 204 sets a base plane that is in contact with a top surface of the rails detected by the rail recognizer 202, with respect to the base image (Step S508). Accordingly, an object that is present below the rails and is less likely to be an obstacle is no longer detected as an obstacle candidate, and therefore processing load by obstacle detection processing can be reduced.

FIG. 7 is an explanatory diagram of an example of processing of setting a base plane in a railway vehicle according to the present embodiment. As illustrated in FIG. 7, the obstacle-candidate recognizer 204 sets, as base planes P1 and P2, flat or curved surfaces that each approximates a plane in the top surface of the rails R recognized by the rail recognizer 202, the plane being in contact with a region with close distances or disparities from the sensor 10.

Referring back to FIG. 5, the obstacle-candidate recognizer 204 then extracts an object included in the monitoring region of the base image as an obstacle candidate based on the range image indicating disparities (or distances) between the base image and the reference image and the value-range information (Step S509). Specifically, the obstacle-candidate recognizer 204 extracts, from objects in the base image, an object for which disparities (or distances) between the base image and the reference image are included in a value range indicated by the value-range information as an obstacle candidate.

An object in the objects included in the monitoring region, only a part of which is present in the monitoring region, is highly likely not detected as an obstacle, for example, because the size of that object is smaller than a preset size. Therefore, in the present embodiment, the obstacle-candidate recognizer 204 extracts an object present above the base plane as the obstacle candidate. Specifically, the obstacle-candidate recognizer 204 extracts, from objects included in the monitoring region in the base image, an object located in front of the base plane, that is, an object of which the distance from the sensor 10 is smaller than the distance to the base plane (or an object with disparities larger than the disparities of the base plane) as the obstacle candidate.

The obstacle determination portion 205 detects an obstacle from the obstacle candidates based on at least one of the sizes of the obstacle candidates and motion vectors of the obstacle candidates (Step S510). In the present embodiment, the obstacle determination portion 205 discards, from the obstacle candidates, an obstacle candidate of which a circumscribed rectangle in the base image has an extremely biased aspect ratio, as noise or disturbance. Further, the obstacle determination portion 205 obtains a motion vector of an obstacle candidate in base images in two or more frames in the obstacle candidates and, when the motion vector is an upward vector, discards that obstacle candidate as disturbance such as a bird or smoke. In the remaining obstacle candidates that have not been discarded, the obstacle determination portion 205 detects an obstacle candidate of which a position of center of gravity is located in the monitoring region, as an obstacle.

Subsequently, the result output portion 206 outputs the result of obstacle detection by the obstacle determination portion 205 to the display device 40 and causes the display device 40 to display the result of obstacle detection (Step S511). In the present embodiment, the result output portion 206 causes the display device 40 to display that the obstacle determination portion 205 has detected an obstacle, the distance to the detected obstacle, and the like as the result of obstacle detection. Further, the result output portion 206 outputs audio notifying the result of obstacle detection and/or outputs the result of obstacle detection to a vehicle control device that controls driving of the railway vehicle RV. In addition, the result output portion 206 stores detection-result information indicating the result of obstacle detection in the memory 207. The result output portion 206 can also store the detection-result information in an external memory. By this configuration, an external device can analyze the result of obstacle detection by using the detection-result information memorized in the external memory also in an offline state in which communication with the driving-obstacle detection device 20 of the railway vehicle RV cannot be performed.

Thereafter, the image acquirer 201 determines whether ending of the obstacle detection processing has been instructed (Step S512). When ending of the obstacle detection processing has been instructed (Step S512: Yes), the image acquirer 201 does not acquire a new color image and a new range image, and ends the obstacle detection processing. Meanwhile, when ending of the obstacle detection processing has not been instructed (Step S512: No), the image acquirer 201 returns to Step S501 and acquires a new color image and a new range image.

As described above, according to the railway vehicle RV according to the present embodiment, in a case of detecting an obstacle that hinders driving of the railway vehicle RV by using a color image obtained by image capturing in the travelling direction of the railway vehicle RV, a monitoring region for obstacle detection can be set dynamically and appropriately in the color image, and obstacle detection can be performed. Consequently, the obstacle that hinders driving of the railway vehicle RV can be detected with high accuracy.

(First embodiment)

In a first embodiment described below, a camera inspection system 21 is further configured based on the above-described driving-obstacle detection device 20. The camera inspection system 21 detects a sign 50 provided around rails (a railway track) on which the railway vehicle RV drives, in place of an obstacle. It suffices that the camera inspection system 21 detects the sign 50 in a manner identical to that of obstacle detection. The sign 50 will be described later. A configuration of the camera inspection system 21 and processing after detection of the sign 50 are described below.

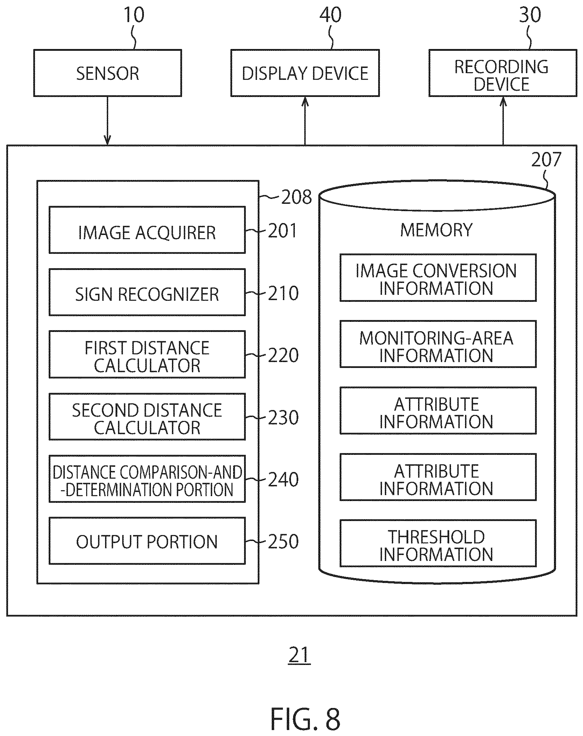

FIG. 8 is a block diagram illustrating an example of a configuration of a camera inspection system according to the first embodiment. The camera inspection system 21 includes the sensor 10, the display device 40, the recording device 30, the memory 207, and an arithmetic processor 208. The sensor 10, the recording device 30, the display device 40, and the memory 207 are basically as explained with reference to FIG. 2.

The arithmetic processor 208 includes the image acquirer 201, a sign recognizer 210, a first distance calculator 220, a second distance calculator 230, a distance comparison-and-determination portion 240, and an output portion 250. A part or whole of the arithmetic processor 208 is implemented by execution of software memorized in the memory 207 by a processor such as a CPU included in the railway vehicle RV.

The sensor 10 as an image capturing device is mounted on the railway vehicle and captures images of the sign 50 provided around a railway track on which the railway vehicle drives at first and second viewpoints. The first and second viewpoints are arranged at different positions spaced from each other by a predetermined distance. The sensor 10 is a so-called a stereo camera that captures images of the same sign 50 with a plurality of cameras having those first and second viewpoints substantially simultaneously.

The image acquirer 201 basically has the same configuration as the image acquirer 201 in FIG. 2. The image acquirer 201 obtains disparities between a first image of the sign 50 at the first viewpoint and a second image of that sign at the second viewpoint.

The sign recognizer 210 includes the rail recognizer 202, the monitoring-area recognizer 203, the obstacle-candidate recognizer 204, and the obstacle determination portion 205 in FIG. 2 and recognizes the sign 50 from the first and second images. An image of the sign 50 is registered in the memory 207 in advance as a recognition dictionary. The sign recognizer 210 determines whether a target of image recognition is the sign 50 on an image by a given technique of pattern image recognition. The method of recognizing the sign 50 may be identical to the method of obstacle recognition described in the above embodiment.

The first distance calculator 220 receives the disparities between the first image of the sign 50 at the first viewpoint and the second image of the sign 50 at the second viewpoint, which have been obtained by the image acquirer 201. The first distance calculator 220 calculates a first distance Z1 between the railway vehicle RV and the sign 50 based on the disparities between the first image and the second image. That is, the first distance calculator 220 calculates the first distance Z1 by using the stereo camera function of the sensor 10.

For example, the first distance Z1 is a distance between the railway vehicle RV and the sign 50 calculated using the disparities between the first and second images. f is a focal length of the sensor 10. B is a distance (an interval) between the first viewpoint and the second viewpoint of the sensor 10. That is, B is a distance between two cameras of the sensor 10. D is a disparity between the first and second images. In this case, the first distance Z1 is represented by using the above Expression 1, as follows.

$$Z1 = f \times B/D \quad \text{(Expression 1)}$$

The focal length f of the sensor 10 and the distance B between the first viewpoint and the second viewpoint are known beforehand and are stored in the memory 207.

The first distance Z1 is calculated using a disparity between the two cameras of the sensor 10 based on both the first and second images. Therefore, the first distance Z1 is shifted from the distance between the railway vehicle RV and the sign 50 when any change occurs in the arrangement, for example, the positions and/or the angles of the two cameras of the sensor 10. That is, the first distance Z1 is liable to be affected by deterioration of the sensor 10 over time.

The second distance calculator 230 calculates a second distance Z2 between the railway vehicle and the sign 50 based on known attribution information related to the size and/or the position of the sign 50 and the length of that attribute information on the first or second image.

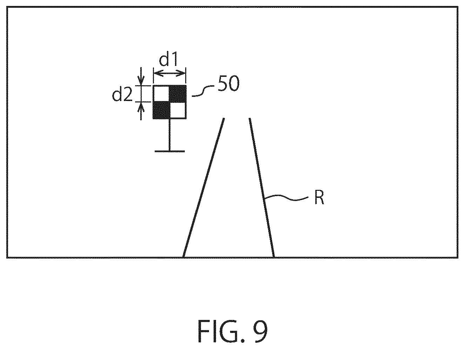

For example, FIG. 9 is a conceptual diagram illustrating a method, useful for understanding the invention, of calculating the second distance. The sign 50 is fixed on the ground around the rails R and has a shape with a predetermined size. When the length in the lateral direction (width) of the actual sign 50 is d1, the length d1 is stored in the memory 207 as already known (preset) attribute information. The sign 50 is configured to have a design easily recognizable by the sensor 10 and is fixed and installed in a monitoring region around the rails R. The sign 50 is preferably installed in an environment with a good view which is not easily affected by disturbance. For example, the sign 50 is suitable for being installed in, for example, a rail yard.

Meanwhile, the first and second images obtained by image capturing of the sign 50 are acquired during driving of the railway vehicle RV. The size of the sign 50 on each of the first and second images is different depending on the distance from the railway vehicle RV to the sign 50. When the sign 50 is relatively far from the railway vehicle RV, the size on the image of the sign 50 is relatively small. To the contrary, when the sign 50 is relatively close to the railway vehicle RV, the size on the image is relatively large. The actual distance Z2 between the railway vehicle RV and the sign 50 is obtained by using such a change in the size on the image of the sign 50 depending on the distance between the railway vehicle RV and the sign 50.

For example, it is assumed that the number of pixels corresponding to the width of the sign 50 on the first or second image displayed on the display device 40 is x and a distance between two pixels adjacent to each other on the display device 40 is s. In this case, the width on the screen of the sign 50 displayed on the display device 40 is $x \times s$. Further, assuming that the focal length of the sensor 10 is f, the actual second distance Z2 between the sign 50 and the railway vehicle RV is represented by Expression 2.

$$Z2 = f \times d1/(x \times s) \qquad \text{(Expression 2)}$$

The second distance Z2 can be calculated by using either one of the first and second images and is not affected by the disparities between the first image and the second image. Therefore, the second distance Z2 can indicate a relatively accurate distance between the railway vehicle RV and the sign 50 even when any change occurs in the arrangement, for example, the positions and/or the angles of the two cameras of the sensor 10. That is, the second distance Z2 is not easily affected by deterioration of the sensor 10 over time. The second distance calculator 230 may calculate the second distance Z2 for each of the first and second images and use either one of the second distances Z2 or an average value of the second distances Z2 for the first and second images.

It suffices that the attribute information is known information related to the size and/or the position of the sign 50. In an example useful for understanding the invention, the attribute information may be the length in the lateral direction (the width) d1 of the sign 50 or the length in the vertical direction of the sign 50. In another example useful for understanding the invention, the attribute information may be a length d2 of a pattern drawn on the sign 50. Other examples of the attribute information are described later.

The distance comparison-and-determination portion 240 calculates a difference between the first distance Z1 and the second distance Z2 and compares this difference and a threshold with each other. When the difference between the first distance Z1 and the second distance Z2 is equal to or larger than the threshold, the distance comparison-and-determination portion 240 determines that there is an abnormality in the arrangement of the two cameras of the sensor 10. Meanwhile, when the difference between the first distance Z1 and the second distance Z2 is smaller than the threshold, the distance comparison-and-determination portion 240 determines that the arrangement of the two cameras of the sensor 10 is normal. When it has been determined that there is an abnormality in the sensor 10, the two cameras of the sensor 10 need calibration. It suffices that the threshold is preset and stored in the memory 207. Further, it suffices that information on the result of normality/abnormality determination by the distance comparison-and-determination portion 240 is stored in the memory 207.

The output portion 250 outputs the information on the result of normality/abnormality determination by the distance comparison-and-determination portion 240. The information on the result of normality/abnormality determination output from the output portion 250 is stored in the recording device 30 and displayed on the display device 40.

The display device 40 displays an alert indicating the abnormality of the sensor 10 when the difference between the first distance and the second distance is larger than the threshold. The display device 40 may display both determination of normality and abnormality of the sensor 10, but may be set to display only the determination of abnormality and not to display the determination of normality.

When the display device 40 displays determination of abnormality, the arrangement of the two cameras of the sensor 10 or the like is calibrated, and maintenance is performed.

Next, operations of the camera inspection system 21 according to the present embodiment are described.

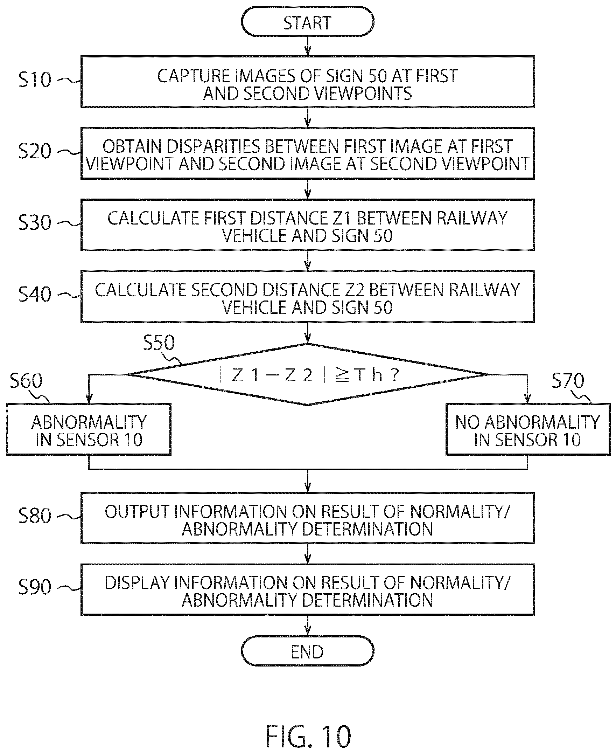

FIG. 10 is a flowchart illustrating an operation example of the camera inspection system 21 according to the first embodiment.

First, the sensor 10 captures images of the sign 50 at the first and second viewpoints (S10). The sensor 10 captures images of the same sign 50 with a plurality of cameras having the first and second viewpoints substantially simultaneously.

Next, the image acquirer 201 obtains disparities between the first image of the sign 50 at the first viewpoint and the second image of that sign at the second viewpoint (S20).

Next, the first distance calculator 220 receives the disparities between the first image of the sign 50 at the first viewpoint and the second image of the sign 50 at the second viewpoint which have been obtained by the image acquirer 201. The first distance calculator 220 calculates the first distance Z1 between the railway vehicle RV and the sign 50 by using Expression 1 based on the disparities between the first image and the second image (S30). That is, the first distance calculator 220 calculates the first distance Z1 by using a stereo camera function of the sensor 10.

Next, the second distance calculator 230 calculates the second distance Z2 between the railway vehicle RV and the sign 50 by using Expression 2 based on the size and/or the position of the sign 50 and the length of the size and/or the position of the sign 50 on the first or second image (S40).

Next, the distance comparison-and-determination portion 240 calculates a difference |Z1-Z2| between the first distance Z1 and the second distance Z2 and compares this difference and a threshold Th with each other (S50). When the difference between the first distance Z1 and the second distance Z2 is equal to or larger than the threshold (|Z1-Z2|≥Th), the distance comparison-and-determination portion 240 determines that there is an abnormality in the arrangement of the two cameras of the sensor 10 (S60). Meanwhile, when the difference between the first distance Z1 and the second distance Z2 is smaller than the threshold (|Z1-Z2|<Th), the distance comparison-and-determination portion 240 determines that the arrangement of the two cameras of the sensor 10 is normal (S70). It suffices that the threshold is preset and stored in the memory 207. Further, it suffices that information on the result of normality/abnormality determination by the distance comparison-and-determination portion 240 is stored in the memory 207.

The output portion 250 outputs the information on the result of normality/abnormality determination by the distance comparison-and-determination portion 240 (S80). The information on the result of normality/abnormality determination output from the output portion 250 is stored in the recording device 30 and displayed by the display device 40 (S90). The display device 40 may display both determination of normality and abnormality of the sensor 10, but may be set to display only determination of abnormality and not to display determination of normality.

When the display device 40 displays determination of abnormality, the arrangement or the like of the two cameras of the sensor 10 is calibrated.

The flow in FIG. 10 is periodically repeated during driving of the railway vehicle RV. Accordingly, the camera inspection system 21 can determine the abnormality of the sensor 10 in real time during driving of the railway vehicle RV and know the abnormality on the spot. Therefore, it is possible to automatically and easily determine the necessity of calibration of the sensor 10 without waiting until periodic inspection of the railway vehicle RV.

The railway vehicle RV usually drives on specific rails R. Therefore, for example, by performing camera inspection processing according to the present embodiment every time the railway vehicle RV departs from a rail yard, decrease in the obstacle detection performance of the sensor 10 can be found early.

(First modification)

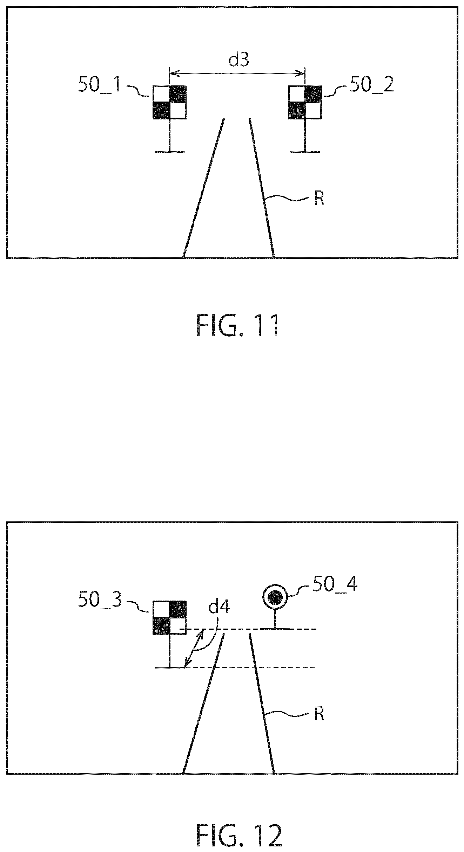

FIG. 11 is a conceptual diagram illustrating a method of calculating the second distance Z2 according to a first modification of the first embodiment. A plurality of signs 50_1 and 50_2 are provided. Attribute information may be a distance d3 between the sign 50_1 and the sign 50_2. The signs 50_1 and 50_2 are arranged side by side in a direction substantially perpendicular to the rails R and are installed at substantially the same distance from the railway vehicle RV. Therefore, the distance d3 is the distance between the signs 50_1 and 50_2 in the direction substantially perpendicular to the rails R. As described above, the attribute information may be the distance between the sign 50_1 and the sign 50_2. The actual distance d3 is stored in the memory 207 in advance.

Patterns on the signs 50_1 and 50_2 may be the same as each other. However, the patterns are not specifically limited as long as they are registered in the memory 207 and can be recognized as signs, respectively. Accordingly, the signs 50_1 and 50_2 may have different patterns from each other.

(Second modification)

FIG. 12 is a conceptual diagram illustrating a method of calculating the second distance Z2 according to a second modification of the first embodiment. A plurality of signs 50_3 and 50_4 are provided. Attribute information is a distance d4 between the sign 50_3 and the sign 50_4 along the rails R. The signs 50_3 and 50_4 are arranged on both sides of the rails R at different positions from each other in a direction substantially parallel to the rails R. Therefore, the distance d4 is the distance between the signs 50_3 and 50_4 in the direction substantially parallel to the rails R. As described above, the attribute information may be the distance between the signs 50_3 and 50_4. The actual distance d4 is stored in the memory 207 in advance.

By making patterns on the signs 50_3 and 50_4 different from each other, the signs 50_3 and 50_4 are distinguished from each other. By distinguishing the signs 50_3 and 50_4 from each other, it is found that the sign 50_3 is arranged in front and the sign 50_4 is arranged in the back.

Even the first and second modifications with such configurations can obtain effects identical to those of the first embodiment described above.

**Claims**

1. A camera inspection system (21) comprising:

an image capturing portion (10) mountable on a railway vehicle and configured to capture images of a sign provided around a railway track on which the railway vehicle drives at first and second viewpoints;
an arithmetic processor (208) configured to obtain a disparity between a first image of the sign at the first viewpoint and a second image of the sign at the second viewpoint, calculate a first distance between the railway vehicle and the sign based on the disparity between the first image and the second image, calculate a second distance between the railway vehicle and the sign based on known attribute information related to a size and/or a position of the sign and a length of the attribute information on the first or second image, and determine whether a difference between the first distance and the second distance is larger than a threshold; and
a memory (207) configured to store therein the attribute information, **characterized in that**

a plurality of signs (50_1, 50_2, 50_3, 50_4) are provided, and the attribute information is a distance between the signs.

2. The system of Claim 1, wherein

the arithmetic processor (208) calculates the first distance by using Expression 1:

$$Z1 = f \times B/D \qquad (\text{Expression 1})$$

where Z1 is the first distance between the railway vehicle and the sign, f is a focal length of the image capturing portion, B is a distance between the first viewpoint and the second viewpoint of the image capturing portion, and D is the parity.

3. The system of Claim 1, wherein

the arithmetic processor (208) calculates the second distance by using Expression 2:

$$Z2 = f \times d/(x \times s) \qquad (\text{Expression 2})$$

where Z2 is the second distance between the railway vehicle and the sign, f is a focal length of the image capturing portion, d is an actual length of attribute information of the sign, x is the number of pixels of the attribute information on the first or second image, and s is a distance between pixels adjacent to each other on a display that displays the first image and/or the second image.

**Patentansprüche**

1. Kamerainspektionssystem (21), umfassend:

eine Bilderfassungseinheit (10), die an einem Schienenfahrzeug montierbar ist und dazu ausgestaltet ist, Bilder eines Zeichens, das um ein Eisenbahngleis herum bereitgestellt ist, auf dem das Schienenfahrzeug fährt, an einem ersten und einem zweiten Blickpunkt aufzunehmen;
einen Arithmetik-Prozessor (208), der dazu ausgestaltet ist, eine Disparität zwischen einem ersten Bild des Zeichens am ersten Blickpunkt und einem zweiten Bild des Zeichens am zweiten Blickpunkt zu erhalten, einen ersten Abstand zwischen dem Schienenfahrzeug und dem Zeichen basierend auf der Disparität zwischen dem ersten Bild und dem zweiten Bild zu berechnen, einen zweiten Abstand zwischen dem Schienenfahrzeug und dem Zeichen basierend auf bekannten Attributinformationen, die eine Größe und/oder eine Position des Zeichens betreffen, und einer Länge der Attributinformationen über das erste oder das zweite Bild zu berechnen und zu bestimmen, ob eine Differenz zwischen dem ersten Abstand und dem zweiten Abstand größer als ein Schwellenwert ist; und
einen Speicher (207), der dazu ausgestaltet ist, darin die Attributinformationen zu speichern, **dadurch gekennzeichnet, dass** mehrere Zeichen (50_1, 50_2, 50_3, 50_4) bereitgestellt werden und die Attributinformationen ein Abstand zwischen den Zeichen sind.

2. System nach Anspruch 1, wobei

der Arithmetik-Prozessor (208) den ersten Abstand unter Verwendung des Ausdrucks 1 berechnet:

$$Z1 = f \times B / D \qquad (\text{Ausdruck 1})$$

wobei Z1 der erste Abstand zwischen dem Schienenfahrzeug und dem Zeichen ist, f eine Brennweite der Bildaufnahmeeinheit ist, B ein Abstand zwischen dem ersten Blickpunkt und dem zweiten Blickpunkt der Bildaufnahmeeinheit ist und D die Parität ist.

3. System nach Anspruch 1, wobei

der Arithmetik-Prozessor (208) den zweiten Abstand unter Verwendung des Ausdrucks 2 berechnet:

$$Z2 = f \times d / (x \times s) \qquad \text{(Ausdruck 2)}$$

wobei Z2 der zweite Abstand zwischen dem Schienenfahrzeug und dem Zeichen ist, f eine Brennweite der Bildaufnahmeeinheit ist, d eine tatsächliche Länge von Attributinformationen des Zeichens ist, x die Anzahl von Pixeln der Attributinformationen über das erste oder das zweite Bild ist und s ein Abstand zwischen Pixeln ist, die einander auf einer Anzeige benachbart sind, die das erste Bild und/oder das zweite Bild anzeigt.

## Revendications

1. Système d'inspection de caméra (21) comprenant :

   une partie de capture d'images (10) pouvant être montée sur un véhicule ferroviaire et configurée pour capturer des images d'un panneau prévu autour d'une voie ferrée sur laquelle se déplace le véhicule ferroviaire à des premier et deuxième points de vue ;
   un processeur arithmétique (208) configuré pour obtenir une disparité entre une première image du panneau au premier point de vue et une deuxième image du panneau au deuxième point de vue, calculer une première distance entre le véhicule ferroviaire et le panneau sur la base de la disparité entre la première image et la deuxième image, calculer une deuxième distance entre le véhicule ferroviaire et le panneau sur la base d'informations d'attribut connues liées à une taille et/ou une position du panneau et une longueur des informations d'attribut sur la première ou deuxième image, et déterminer si une différence entre la première distance et la deuxième distance est ou non plus grande qu'un seuil ; et
   une mémoire (207) configurée pour stocker, dans celle-ci, les informations d'attribut, **caractérisé en ce que** une pluralité de panneaux (50_1, 50_2, 50_3, 50_4) sont prévus, et les informations d'attribut sont une distance entre les panneaux.

2. Système selon la revendication 1, dans lequel

   le processeur arithmétique (208) calcule la première distance à l'aide de l'Expression 1 :

   $$Z1 = f \times B/D \qquad \text{(Expression 1)}$$

   où Z1 est la première distance entre le véhicule ferroviaire et le panneau, f est une longueur focale de la partie de capture d'images, B est une distance entre le premier point de vue et le deuxième point de vue de la partie de capture d'images, et D est la parité.

3. Système selon la revendication 1, dans lequel

   le processeur arithmétique (208) calcule la deuxième distance à l'aide de l'Expression 2 :

   $$Z2 = f \times d/(x \times s) \qquad \text{(Expression 2)}$$

   où Z2 est la deuxième distance entre le véhicule ferroviaire et le panneau, f est une longueur focale de la partie de capture d'images, d est une longueur réelle d'informations d'attribut du panneau, x est le nombre de pixels des informations d'attribut sur la première ou deuxième image, et s est une distance entre des pixels adjacents les uns aux autres sur un dispositif d'affichage qui affiche la première image et/ou la deuxième image.

TRAVELING
DIRECTION

40

10

RV

DISPLAY
DEVICE

RECORDING
DEVICE

DRIVING-OBSTACLE
DETECTION DEVICE

30

20

R

FIG. 1

10

SENSOR

40

DISPLAY DEVICE

30

RECORDING
DEVICE

20

DRIVING-OBSTACLE DETECTION DEVICE

207

IMAGE ACQUIRER — 201

RAIL RECOGNIZER — 202

MONITORING-AREA
RECOGNIZER — 203

OBSTACLE-CANDIDATE
RECOGNIZER — 204

OBSTACLE
DETERMINATION PORTION — 205

RESULT OUTPUT
PORTION — 206

MEMORY

IMAGE CONVERSION
INFORMATION

MONITORING-AREA
INFORMATION

DETECTION-RESULT
INFORMATION

FIG. 2

FIG. 3

FIG. 4

```
                    ┌─────────────┐
                    │    START    │
                    └─────────────┘
                           │
S501 ──  ACQUIRE COLOR IMAGE AND RANGE IMAGE
                           │
S502 ──  CONVERT TO GRAYSCALE IMAGE
                           │
S503 ──  CONVERT TO RECTIFIED IMAGE
                           │
S504 ──  OBTAIN DISPARITIES BETWEEN BASE IMAGE
         AND REFERENCE IMAGE
                           │
S505 ──  DETECT RAIL CANDIDATE
                           │
S506 ──  DETECT RAIL
                           │
S507 ──  SET MONITORING REGION
                           │
S508 ──  SET BASE PLANE
                           │
S509 ──  EXTRACT OBSTACLE CANDIDATE
                           │
S510 ──  DETECT OBSTACLE
                           │
S511 ──  OUTPUT DETECTION RESULT
                           │
S512 ──  IS DETECTION PROCESSING ENDED?  ── NO
                           │ YES
                    ┌─────────────┐
                    │     END     │
                    └─────────────┘
```

FIG. 5

FIG. 6

FIG. 7

FIG. 8

FIG. 9

```
                    ┌─────────────┐
                    │    START    │
                    └──────┬──────┘
                           ↓
S10 ~  ┌──────────────────────────────────────────┐
       │   CAPTURE IMAGES OF SIGN 50 AT FIRST      │
       │        AND SECOND VIEWPOINTS              │
       └──────────────────┬───────────────────────┘
                           ↓
S20 ~  ┌──────────────────────────────────────────┐
       │ OBTAIN DISPARITIES BETWEEN FIRST IMAGE AT FIRST │
       │ VIEWPOINT AND SECOND IMAGE AT SECOND VIEWPOINT  │
       └──────────────────┬───────────────────────┘
                           ↓
S30 ~  ┌──────────────────────────────────────────┐
       │   CALCULATE FIRST DISTANCE Z1 BETWEEN RAILWAY │
       │          VEHICLE AND SIGN 50             │
       └──────────────────┬───────────────────────┘
                           ↓
S40 ~  ┌──────────────────────────────────────────┐
       │ CALCULATE SECOND DISTANCE Z2 BETWEEN RAILWAY │
       │          VEHICLE AND SIGN 50             │
       └──────────────────┬───────────────────────┘
                           ↓
        S50
          ◇────────────────────────────────◇
          │      | Z 1 − Z 2 | ≧ T h ?      │
   ◇──────────────────────────────────────────────◇
S60                                                  S70
 ┌──────────────┐                          ┌──────────────┐
 │ ABNORMALITY  │                          │ NO ABNORMALITY │
 │ IN SENSOR 10 │                          │  IN SENSOR 10  │
 └──────┬───────┘                          └───────┬──────┘
                           ↓
S80 ~  ┌──────────────────────────────────────────┐
       │ OUTPUT INFORMATION ON RESULT OF NORMALITY/ │
       │       ABNORMALITY DETERMINATION           │
       └──────────────────┬───────────────────────┘
                           ↓
S90 ~  ┌──────────────────────────────────────────┐
       │ DISPLAY INFORMATION ON RESULT OF NORMALITY/ │
       │       ABNORMALITY DETERMINATION           │
       └──────────────────┬───────────────────────┘
                           ↓
                    ┌─────────────┐
                    │     END     │
                    └─────────────┘
```

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019193373 A
- JP 2008304248 A
- JP 6122365 B
- JP 2019084881 A
- JP 2019188996 A